# EUROPÄISCHE PATENTSCHRIFT

(11) **EP 3 006 237 B1**
(45) Veröffentlichungstag und Bekanntmachung des Hinweises auf die Patenterteilung: **04.04.2018**
(21) Anmeldenummer: 15450033.4
(22) Anmeldetag: 24.09.2015
(51) Int. Cl.: B60G 11/02, B60G 11/04, B60G 11/113, F16F 1/368

(54) **FEDER FÜR RADAUFHÄNGUNG UND RADAUFHÄNGUNG**
SPRING FOR WHEEL SUSPENSION AND WHEEL SUSPENSION
RESSORT POUR SUSPENSION DE ROUE ET SUSPENSION DE ROUE

(30) Priorität: 06.10.2014 AT 7512014
(43) Veröffentlichungstag der Anmeldung: 13.04.2016
(73) Patentinhaber: Hendrickson Commercial Vehicle Systems Europe GmbH, 8750 Judenburg (AT)
(72) Erfinder: MARTEAU-LORANT, Séverin, 25200 Grand-Charmont (FR); CHARVIEUX, Franck, 25200 Montbéliard (FR); BROGLY, Sébastien, 90850 Essert (FR)
(74) Vertreter: Beer & Partner Patentanwälte KG

(56) Entgegenhaltungen:
- EP-A1- 0 229 471
- WO-A1-2014/145455
- DE-A1- 2 248 006
- FR-A1- 2 437 530
- JP-A- S5 790 434
- JP-A- S63 225 738
- US-A1- 2009 256 328
- US-A1- 2013 056 900
- US-A1- 2013 320 644

## Beschreibung

Die Erfindung betrifft eine Feder, insbesondere Blattfeder, für eine Radaufhängung eines Fahrzeuges, wobei die Feder einen länglichen Federkörper mit zwei Längsenden und einem mittleren Bereich aufweist und wobei der mittlere Bereich des Federkörpers eine größere Basisdicke aufweist.

Zudem betrifft die Erfindung eine Radaufhängung eines Fahrzeuges mit einer Achse und einer Feder.

Darüber hinaus betrifft die Erfindung ein Fahrzeug, insbesondere ein mittelschweres oder schweres Lastkraftfahrzeug.

Eine gattungsgemäße Feder ist aus der US 2009/256 328 A1 und der DE 22 48 006 A1 bekannt.

Bei Kraftfahrzeugen wird zwischen Personenkraftwagen (PKW) und Lastkraftwagen (LKW) unterschieden, wobei die Anforderungen bezüglich der Federung bzw. der Radaufhängung aufgrund der zu transportierenden Lasten unterschiedlich sind. Bei LKW wird weiters zwischen leichten LKW ("LLKW", bis 7,5 t), mittelschweren LKW ("LKW", von 7,5 t bis 12 t) und schweren LKW ("SKW", ab 12 t) unterschieden, wobei die Anforderungen bezüglich der Federung bzw. der Radaufhängung wiederum aufgrund der zu transportierenden Lasten unterschiedlich sind.

Federn für eine Radaufhängung sind grundsätzlich derart ausgelegt, dass diese gute Fahreigenschaften erlauben und eine lange Lebensspanne haben, welche insbesondere von der Belastbarkeit und Haltbarkeit des Materials, aus welcher die Feder besteht, abhängt. Es ist die Verwendung von Federstahl und Verbundwerkstoff als Material für solche Federn bekannt.

Weiterhin muss gewährleistet werden, dass die Feder, welche üblicherweise durch Schrauben mit der Achse verbunden ist, ausreichend (durch die Schrauben) fixiert ist. Bei der Verwendung von Federstahl können die Schrauben mit einem höheren Drehmoment befestigt werden, wodurch eine sichere Fixierung gewährleistet ist. Bei einer Feder aus Verbundwerkstoff wird üblicherweise ein geringeres Drehmoment angewendet, um zu vermeiden, dass der Verbundwerkstoff sonst beschädigt würde.

Der Erfindung liegt die Aufgabe zu Grunde, eine Feder sowie eine Radaufhängung eines Fahrzeuges zu ermöglichen, welche eine möglichst lange Lebensspanne hat, wobei insbesondere ein Verrutschen der Feder in Bezug auf die Achse stark vermindert bzw. vermieden wird. Zudem ist es eine Aufgabe der Erfindung, zu ermöglichen, dass die Feder mit einem angemessenen Drehmoment befestigt werden kann, ohne dass die Feder bricht. Insbesondere ist es eine Aufgabe der Erfindung, ein Verrutschen und/oder Brechen der Feder bei einer Kollision der Feder mit anderen Bauteilen der Radaufhängung zu vermeiden, was insbesondere bei einem Bremsvorgang passieren kann.

Gelöst wird diese Aufgabe erfindungsgemäß mit einer Feder, welche die Merkmale des Anspruches 1 aufweist.

Zudem wird die Aufgabe erfindungsgemäß mit einer Radaufhängung gelöst, welche die Merkmale des Anspruches 5 aufweist.

Darüber hinaus wird die Aufgabe erfindungsgemäß mit einem Fahrzeug gelöst, welches die Merkmale des Anspruches 13 aufweist.

Bevorzugte und vorteilhafte Ausführungsformen der Erfindung sind Gegenstand der Unteransprüche.

Erfindungsgemäß ist vorgesehen, der Federkörper aus einem Verbundwerkstoff besteht, dass im mittleren Bereich des Federkörpers ein länglicher Schlitz als Vertiefung vorgesehen ist, der im Wesentlichen quer zur Längserstreckung des Federkörpers verläuft, und dass an der Oberfläche des mittleren Bereichs des Federkörpers Fasern, insbesondere Glasfasern, angeordnet sind, die im Wesentlichen parallel zur Vertiefung verlaufen und vorzugsweise zu beiden Längsseiten der Vertiefung angeordnet sind.

Somit ist es möglich, dass eine verhältnismäßig leichte Feder auch für mittelschwere und schwere LKW aus einem im Vergleich zu Federstahl leichteren Verbundwerkstoff hergestellt werden kann, wobei das Risiko eines Bruches der Feder und das Risiko, dass die Feder verrutscht, stark vermindert ist.

Der Verbundwerkstoff der Feder weist vorteilhafterweise Glasfasern als Verstärkungselemente auf. Zusätzlich oder alternativ dazu weist der Verbundwerkstoff duroplastisches Harz oder thermoplastisches Harz auf. Insbesondere kann vorgesehen sein, dass der Verbundwerkstoff Polyurethan und/oder Polyamid und/oder Polyester aufweist.

Im Rahmen der Erfindung ist es bevorzugt, wenn die Härte des Verbundwerkstoffes bei Verwendung von duroplastischem Material im Bereich von > 90 shore D liegt. Bei Verwendung von thermoplastischem Material kann dieses im Rahmen der Erfindung eine geringere Härte aufweisen als duroplastisches Material.

Insbesondere ist es bevorzugt, wenn an der Oberfläche des Federkörpers Fasern, beispielsweise Glasfasern, angeordnet sind, die im Wesentlichen parallel zur Längserstreckung des Federkörpers, insbesondere vom Bereich eines Längsendes zum Bereich des gegenüberliegenden Längsendes des Federkörpers, verlaufen. Somit ist die Feder trotz ihres vergleichsweise geringen Gewichtes verstärkt, wobei das Risiko, dass die Feder bricht, weiterhin verringert ist und wobei einem Verrutschen der Feder entgegen gewirkt wird.

Während einem Bremsvorgang wird ein erhöhter Druck auf die Feder ausgeübt. Mit der erfindungsgemäßen Feder wird vermieden, dass sich die im Wesentlichen parallel zur Längserstreckung des Federkörpers angeordneten Fasern dann lösen.

Die im Wesentlichen parallel zur Längserstreckung des Federkörpers als auch die im Wesentlichen quer zur Längserstreckung des Federkörpers verlaufenden Fasern können direkt auf dem Federkörper angeordnet sein. Sie können auch indirekt auf dem Federkörper angeordnet sein, z.B. auf einer Zwischenschicht, wobei die Zwischenschicht direkt auf dem Federkörper angeordnet sein kann. Diese Fasern sind im Gegensatz zu Glasfasern des Verbundwerkstoffes nicht innerhalb des Federkörpers angeordnet.

Erfindungsgemäß ist zudem eine Radaufhängung mit einer Achse und einer erfindungsgemäßen Feder vorgesehen. Es versteht sich, dass an der Achse zwei erfindungsgemäße Federn (für jedes Rad eine Feder) angeordnet sein können.

In einer bevorzugten Ausführungsform der Erfindung ist die Vertiefung im Federkörper an der Seite des Federkörpers angeordnet, die in Einsatzposition zur Achse weist. Die Vertiefung kann zusätzlich auch an der gegenüberliegenden Seite des Federkörpers angeordnet sein.

Das Verrutschen der Feder kann besonders wirksam vermieden werden, wenn im mittleren Bereich des Federkörpers ein Abdeckteil, insbesondere eine Platte, vorzugsweise eine Stahlplatte, angeordnet ist, der einen Vorsprung aufweist, der in Form und Größe mit der im mittleren Bereich des Federkörpers angeordneten Vertiefung korrespondiert. In einer besonders bevorzugten Ausführungsform greift der Vorsprung des Abdeckteils in die Vertiefung des Federkörpers ein.

Wenn der Abdeckteil, insbesondere die Stahlplatte, mit dem Federkörper kollidiert, besteht das Risiko, dass der Federkörper beschädigt wird. Dieses Risiko ist bei einem Bremsvorgang besonders erhöht. Insbesondere können die (Glas-)Fasern an der Oberfläche des Federkörpers beschädigt werden. Um dies zu vermeiden ist vorteilhafterweise vorgesehen, dass zwischen dem Federkörper und dem Abdeckteil ein Zwischenstück angeordnet ist. In einer besonders sicheren Ausführungsform der Erfindung ist vorgesehen, dass die Härte des Zwischenstücks geringer ist als die Härte des Federkörpers, insbesondere im Bereich zwischen 30 shore D und 90 shore D, wobei das Zwischenstück vorzugsweise aus Gummi oder aus thermoplastischem Werkstoff besteht.

Der Druck, der auf das Zwischenstück ausgeübt wird, kann zu einer Verspannung des Zwischenstückes führen, wobei sich die Länge und/oder die Breite des Zwischenstückes vergrößert. Um dies zu vermeiden weist der Abdeckteil in einer vorteilhaften Weiterbildung an der dem Federkörper zugewandten Seite eine Vertiefung auf, die in Form und Größe mit dem Zwischenstück korrespondiert, wobei insbesondere das Zwischenstück formschlüssig in der Vertiefung des Abdeckteils angeordnet ist.

Im Rahmen der Erfindung ist es weiterhin bevorzugt, dass der Abdeckteil derart ausgeführt und am Zwischenstück angeordnet ist, dass das Abdeckteil auch in Bereichen, in welchen kein Zwischenstück zwischen dem Federkörper und dem Abdeckteil vorgesehen ist, nicht mit dem Federkörper in Kontakt ist. Im Rahmen der Erfindung ist also vorgesehen, dass zwischen dem Abdeckteil und dem Federkörper ein Spalt vorgesehen ist. Somit wird vermieden, dass das Abdeckteil Druck auf den Federkörper ausübt.

Im Rahmen der Erfindung ist vorteilhafterweise vorgesehen, dass der Federkörper über U-Bolzen mit der Achse verbunden ist.

Die erfindungsgemäße Feder und die erfindungsgemäße Radaufhängung sind sowohl für eine Radaufhängung für Vorderräder als auch für die Hinterräder eines Fahrzeuges verwendbar. Insbesondere ist der Einsatz bei einer Radaufhängung für Vorderräder von Vorteil, da bei einem Bremsvorgang die Radaufhängung für die Vorderräder besonders beansprucht wird und daher insbesondere das Brechen der Feder während dem Bremsvorgang vermieden wird.

Erfindung bezieht sich insbesondere auf eine Feder für eine Radaufhängung für Vorderräder eines Fahrzeuges.

Weitere Einzelheiten, Merkmale und Vorteile der Erfindung ergeben sich aus der nachstehenden Beschreibung unter Bezugnahme auf die angeschlossenen Zeichnungen, in welchen bevorzugte Ausführungsformen dargestellt sind.

Es zeigt:
- Fig. 1: eine Ausführungsform einer erfindungsgemäßen Radaufhängung mit einer Ausführungsform einer erfindungsgemäßen Feder,
- Fig. 2: einen Ausschnitt einer erfindungsgemäßen Feder im mittigen Bereich des Federkörpers,
- Fig. 3 und 4: Ausschnitte einer erfindungsgemäßen Feder im mittigen Bereich des Federkörpers in Schnittansicht,
- Fig. 5: eine Ausführungsform einer erfindungsgemäßen Feder mit teilweise angedeuteten Längsfasern,
- Fig. 6: eine Ausführungsform einer erfindungsgemäßen Feder mit teilweise angedeuteten Querfasern im mittigen Bereich des Federkörpers,
- Fig. 7: eine Ausführungsform eines Aufbaus aus Federkörper, Zwischenstück und Abdeckteil in Explosionsdarstellung,
- Fig. 8: eine Ausführungsform von Zwischenstück und Abdeckteil in Explosionsdarstellung und
- Fig. 9: das Zwischenstück und den Abdeckteil gemäß Fig. 8 in zusammengebautem Zustand.

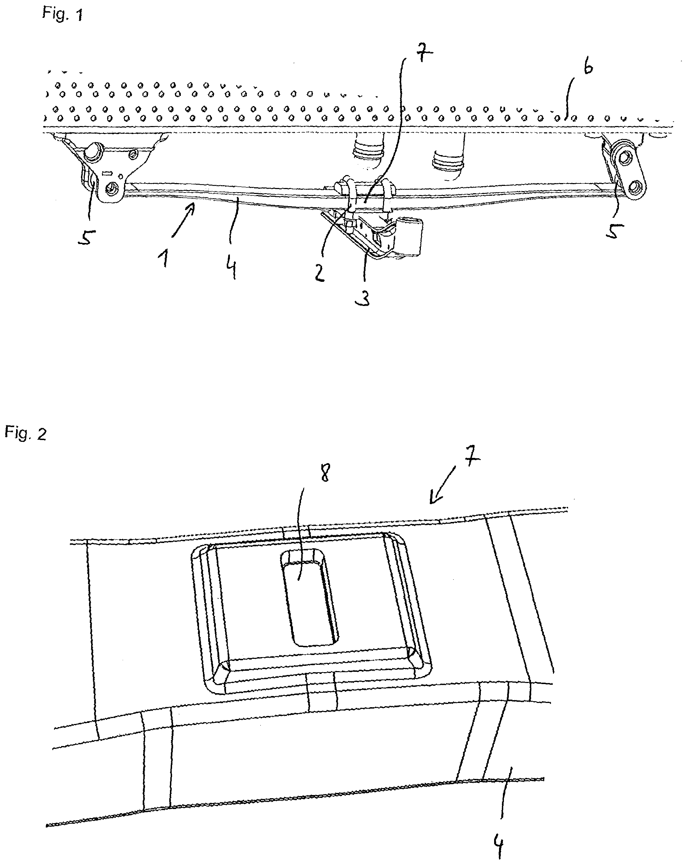

Fig. 1 zeigt eine Radaufhängung eines LKW über 7,5 t, bei welcher eine Feder 1 in Form einer Blattfeder 1 über U-Bolzen 2 mit der Achse 3 des LKW verbunden ist. Die Feder 1 hat einen länglichen Federkörper 4 aus Verbundwerkstoff, der an beiden Längsenden ein gerolltes Auge 5 aufweist. Über die Augen 5 ist der Federkörper 4 mit dem Fahrgestell 6 des LKW verbunden.

Je nach Art der Feder 1 können beide Längsenden ein Auge 5 aufweisen. Es kann auch ein Längsende ein gerolltes oder angeformtes, z.B. im Federkörper 4 eingebrachtes, Auge 5 aufweisen, wogegen das andere Längsende im Wesentlichen flach verläuft. In den zuletzt genannten Ausführungsformen kann der Federkörper 4 insbesondere im Bereich zum flach verlaufenden Längsende abgewinkelt bzw. abgekröpft sein. In einer anderen Ausführungsform können auch beide Enden im Wesentlichen flach und ggf. leicht abgekröpft (ohne Auge) verlaufen.

Der mittlere Bereich 7 des Federkörpers 4 weist eine größere Basisdicke auf, als der Rest des Federkörpers 4, wobei im mittleren Bereich 7 des Federkörpers 4, wie in Fig. 2 ersichtlich, eine Vertiefung 8 vorgesehen ist. Die Vertiefung 8 ist als länglicher Schlitz 8 ausgeführt, der quer zur Längserstreckung des Federkörpers 4 verläuft. Die größere Basisdicke des Federkörpers 4 in seinem mittleren Bereich 7 wird durch eine Erhöhung erreicht. Im gezeigten Ausführungsbeispiel ist eine Erhöhung auf einer Seite des Federkörpers ersichtlich. Es kann auch auf der gegenüberliegenden Seite eine zweite Erhöhung vorgesehen sein. Die an den mittleren Bereich 7 angrenzenden Bereiche des Federkörpers 4 können beispielsweise eine Höhe (Basisdicke) von ca. 64 mm aufweisen. Die Erhöhung im mittleren Bereich 7 kann jeweils eine zusätzliche Höhe von ca. 8 mm haben. Wenn an zwei gegenüberliegenden Seiten des Federkörpers 4 solche Erhöhungen vorgesehen sind, so kann der mittlere Bereich 7 mit größerer Basisdicke demnach eine Höhe von ca. 80 mm aufweisen.

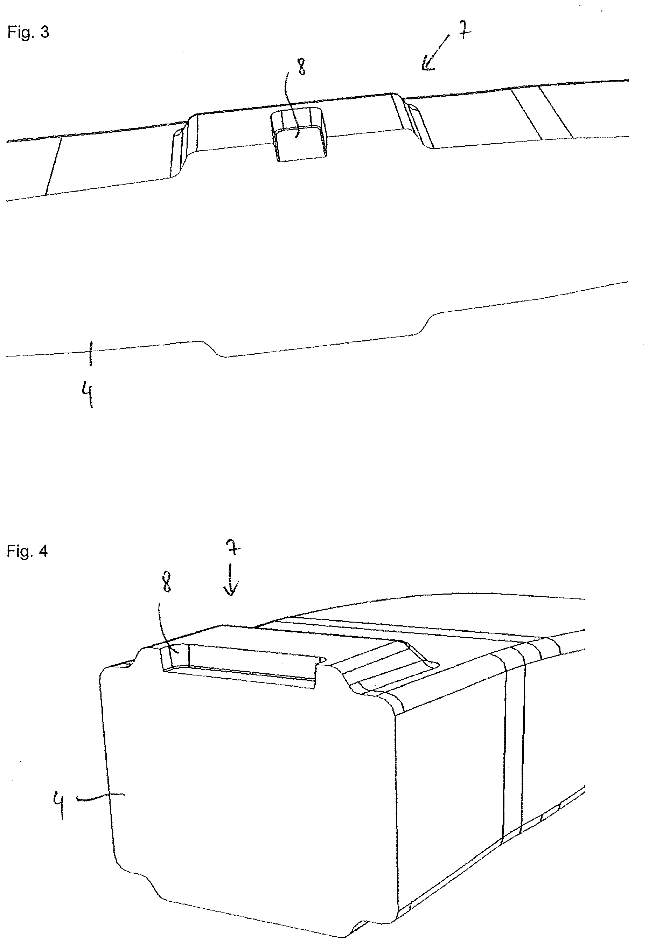

In den Ausführungsformen gemäß Fig. 3 und 4 kann der mittlere Bereich 7 mit größerer Basisdicke eine Länge von ca. 68 mm und eine Breite von ca. 59,5 mm haben. Diese Werte können je Ausführungsform der nach Feder 1 variieren. Der Schlitz 8 kann eine Länge von ca. 47 mm und eine Breite von ca. 16,5 mm haben.

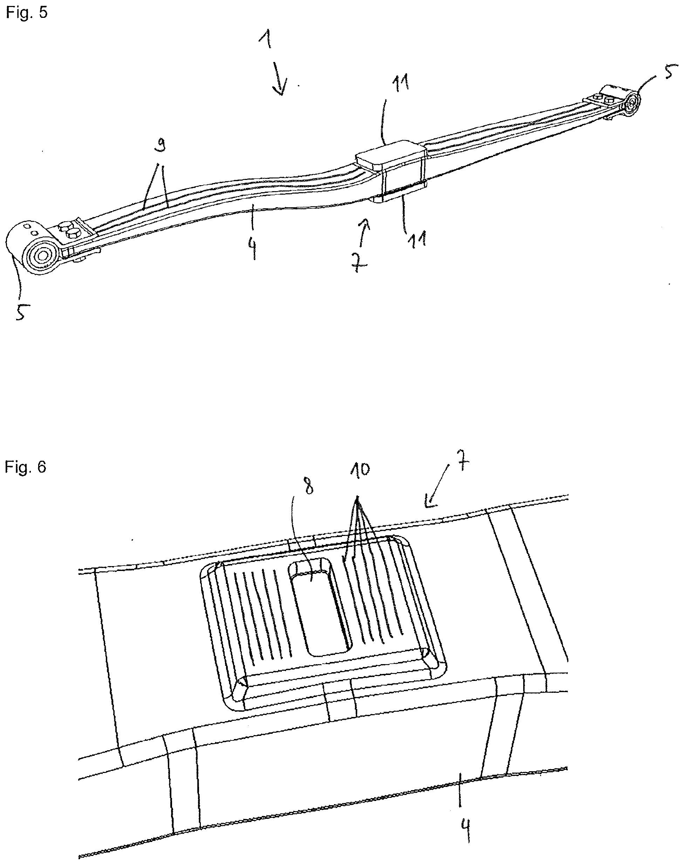

In Fig. 5 ist eine Ausführungsform einer erfindungsgemäßen Feder dargestellt, bei welcher an der Oberfläche des Federkörpers 4 Fasern 9 angeordnet sind, die im Wesentlichen parallel zur Längserstreckung des Federkörpers 4 vom Bereich eines Längsendes zum Bereich des gegenüberliegenden Längsendes des Federkörpers verlaufen (Längsfasern 9). Zusätzlich zu den Längsfasern 9 können an der Oberfläche des mittleren Bereichs 7 des Federkörpers 4 Fasern 10 angeordnet sein, die im Wesentlichen quer zur Längserstreckung des Federkörpers 4 verlaufen (Querfasern 10). Wie in Fig. 6 dargestellt, können die Querfasern 10 im Wesentlichen parallel zur Vertiefung verlaufen und zu beiden Längsseiten der Vertiefung 8 angeordnet sein.

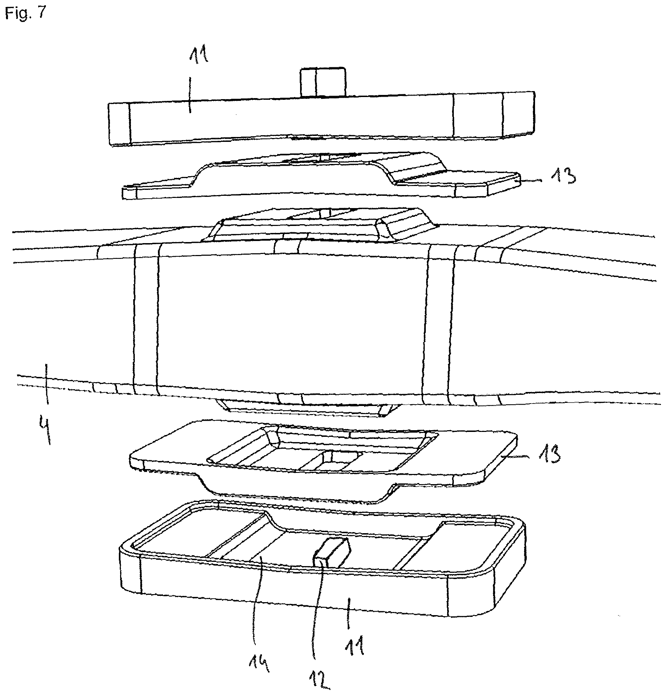

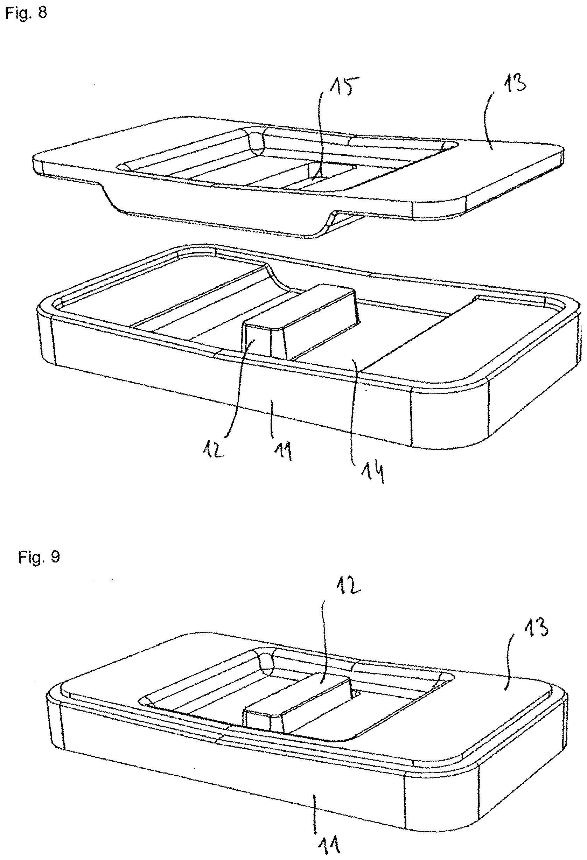

Fig. 7 zeigt, dass auf zwei gegenüberliegenden Seiten des Federkörpers je eine Vertiefung 8 vorgesehen ist, nämlich an der Seite des Federkörpers 4, die in Einsatzposition zur Achse 3 weist auch an der gegenüberliegenden Seite des Federkörpers 4. Um ein von einem Zulieferer vorinstalliertes System für eine Radaufhängung zu gestalten, wird im mittleren Bereich 7 des Federkörpers 4 ein Abdeckteil 11 angeordnet, welches im gezeigten Ausführungsbeispiel eine Stahlplatte 11 ist. Der Abdeckteil 11 weist, wie insbesondere in den Fig. 8 und 9 gezeigt, einen Vorsprung 12 auf, der in Form und Größe mit der im mittleren Bereich 7 des Federkörpers 4 angeordneten Vertiefung 8 korrespondiert und der in montiertem Zustand des Abdeckteils 11 formschlüssig in die Vertiefung 8 des Federkörpers 4 eingreift.

Um zu vermeiden, dass durch den Abdeckteil 11 Druck auf den weicheren Federkörper 4 ausgeübt wird, ist zwischen dem Federkörper 4 und dem Abdeckteil 11 ein Zwischenstück 13 angeordnet, das eine geringere Härte aufweist als der Federkörper 4. Der Abdeckteil 11 weist an der dem Federkörper 4 zugewandten Seite eine Vertiefung 14 auf, die in Form und Größe mit dem Zwischenstück 13 korrespondiert, so dass das Zwischenstück 13 formschlüssig in der Vertiefung 14 des Abdeckteils 11 angeordnet werden kann (Fig. 8). Das Zwischenstück 13 weist eine Ausnehmung 15 auf, die in Form und Größe mit der im mittleren Bereich 7 des Federkörpers 4 angeordneten Vertiefung 8 korrespondiert und im montierten Zustand oberhalb der Vertiefung 8 angeordnet ist. Der Vorsprung 12 des Abdeckteils 11 durchdringt im montierten Zustand die Ausnehmung 15 (Fig. 9).

In Fig. 2 ist beispielhaft der Auflagebereich für das Zwischenstück 13 angedeutet, welcher ca. 150 mm lang und ca. 80 mm breit sein kann.

## Patentansprüche

1. Feder, insbesondere Blattfeder (1), für eine Radaufhängung eines Fahrzeuges, wobei die Feder (1) einen länglichen Federkörper (4) mit zwei Längsenden und einem mittleren Bereich (7) aufweist und wobei der mittlere Bereich (7) des Federkörpers (4) eine größere Basisdicke aufweist, als der Rest des Federkörpers (4), **dadurch gekennzeichnet, dass** der Federkörper (4) aus einem Verbundwerkstoff besteht, dass im mittleren Bereich (7) des Federkörpers (4) ein länglicher Schlitz (8)als Vertiefung (8) vorgesehen ist, der im Wesentlichen quer zur Längserstreckung des Federkörpers (4) verläuft, und dass an der Oberfläche des mittleren Bereichs (7) des Federkörpers (4) Fasern (10), insbesondere Glasfasern, angeordnet sind, die im Wesentlichen parallel zur Vertiefung (8) verlaufen und vorzugsweise zu beiden Längsseiten der Vertiefung (8) angeordnet sind.

2. Feder nach Anspruch 1, **dadurch gekennzeichnet, dass** der Verbundwerkstoff Glasfasern aufweist, die vorzugsweise als Verstärkungselemente in den Kunststoff des Verbundwerkstoffes eingebettet sind.

3. Feder Anspruch 1 oder 2, **dadurch gekennzeichnet, dass** der Verbundwerkstoff duroplastisches Harz oder thermoplastisches Harz aufweist, insbesondere dass der Verbundwerkstoff Polyurethan und/oder Polyamid und/oder Polyester aufweist.

4. Feder nach einem der Ansprüche 1 bis 3, **dadurch gekennzeichnet, dass** an der Oberfläche des Federkörpers (4) Fasern (9), insbesondere Glasfasern, angeordnet sind, die im Wesentlichen parallel zur Längserstreckung des Federkörpers (4), insbesondere vom Bereich eines Längsendes zum Bereich des gegenüberliegenden Längsendes des Federkörpers (4), verlaufen.

5. Radaufhängung eines Fahrzeuges mit einer Achse (3) und einer Feder (1), **dadurch gekennzeichnet, dass** sie eine Feder (1) nach einem der Ansprüche 1 bis 4 aufweist.

6. Radaufhängung nach Anspruch 5, **dadurch gekennzeichnet, dass** die Vertiefung (8) im Federkörper (4) an der Seite des Federkörpers (4) angeordnet ist, die in Einsatzposition zur Achse (3) weist, und gegebenenfalls auch an der gegenüberliegenden Seite des Federkörpers (4).

7. Radaufhängung nach Anspruch 5 oder 6, **dadurch gekennzeichnet, dass** im mittleren Bereich (7) des Federkörpers (4) ein Abdeckteil (11), insbesondere eine Platte, vorzugsweise eine Stahlplatte (11), angeordnet ist, der einen Vorsprung (12) aufweist, der in Form und Größe mit der im mittleren Bereich (7) des Federkörpers (4) angeordneten Vertiefung (8) korrespondiert, wobei der Vorsprung (12) des Abdeckteils (11) insbesondere in die Vertiefung (8) des Federkörpers (4) eingreift.

8. Radaufhängung nach Anspruch 7, **dadurch gekennzeichnet, dass** zwischen dem Federkörper (4) und dem Abdeckteil (11) ein Zwischenstück (13) angeordnet ist.

9. Radaufhängung nach Anspruch 8, **dadurch gekennzeichnet, dass** der Abdeckteil (11) derart ausgeführt und am Zwischenstück (13) angeordnet ist, dass der Abdeckteil (11) auch in Bereichen, in welchen kein Zwischenstück (13) zwischen dem Federkörper (4) und dem Abdeckteil (11) vorgesehen ist, in einem Abstand zum Federkörper (4) angeordnet ist.

10. Radaufhängung nach Anspruch 8 oder 9, **dadurch gekennzeichnet, dass** das Zwischenstück (13) eine Ausnehmung (15) aufweist, die in Form und Größe mit der im mittleren Bereich (7) des Federkörpers (4) angeordneten Vertiefung (8) korrespondiert und oberhalb der Vertiefung (8) angeordnet ist, wobei der Vorsprung (12) des Abdeckteils (11) die Ausnehmung (15) durchdringt.

11. Radaufhängung nach einem der Ansprüche 8 bis 10, **dadurch gekennzeichnet, dass** die Härte des Zwischenstücks (13) geringer ist als die Härte des Federkörpers (4), insbesondere im Bereich zwischen 30 shore D und 90 shore D, wobei das Zwischenstück (13) vorzugsweise aus Gummi oder aus thermoplastischem Werkstoff besteht.

12. Radaufhängung nach einem der Ansprüche 8 bis 11, **dadurch gekennzeichnet, dass** der Abdeckteil (11) an der dem Federkörper (4) zugewandten Seite eine Vertiefung (14) aufweist, die in Form und Größe mit dem Zwischenstück (13) korrespondiert, insbesondere dass das Zwischenstück (13) insbesondere formschlüssig in der Vertiefung (14) des Abdeckteils (11) angeordnet ist.

13. Fahrzeug, insbesondere mittelschweres oder schweres Lastkraftfahrzeug, **dadurch gekennzeichnet, dass** es eine Radaufhängung nach einem der Ansprüche 5 bis 12 aufweist.

## Claims

1. Spring, in particular leaf spring (1), for a wheel suspension of a vehicle, wherein the spring (1) has an elongated spring body (4) with two longitudinal ends and a central region (7), and wherein the central region (7) of the spring body (4) has a greater base thickness than the rest of the spring body (4), **characterized in that** the spring body (4) consists of a composite material, that in the central region (7) of the spring body (4) an elongated slot (8) is provided as a recess (8), which extends substantially transversely to the longitudinal extension of the spring body (4), and **in that** fibers (10), in particular glass fibers, are arranged on the surface of the central region (7) of the spring body (4), said fibers extending substantially parallel to the recess (8) and being preferably arranged on both longitudinal sides of the recess (8).

2. Spring according to claim 1, **characterized in that** the composite material comprises glass fibers, which are preferably embedded as reinforcing elements in the plastic of the composite material.

3. Spring according to claim 1 or 2, **characterized in that** the composite material comprises thermosetting resin or thermoplastic resin, in particular that the composite material comprises polyurethane and/or polyamide and/or polyester.

4. Spring according to one of the claims 1 to 3, **characterized in that** fibers (9), in particular glass fibers, are arranged on the surface of the spring body (4), said fibers extending substantially parallel to the longitudinal extension of the spring body (4), in particular from the region of one longitudinal end to a region of the opposite longitudinal end of the spring body (4).

5. Wheel suspension of a vehicle having an axle (3) and a spring (1), **characterized in that** it comprises a spring (1) according to one of the claims 1 to 4.

6. Wheel suspension according to claim 5, **characterized in that** the recess (8) is arranged in the spring body (4) on the side of the spring body (4), which in the in-use position faces the axle (3), and optionally also on the opposite side of the spring body (4).

7. Wheel suspension according to claim 5 or 6, **characterized in that** in the central region (7) of the spring body (4) a cover part (11), in particular a plate, preferably a steel plate (11), is arranged, which has a projection (12), which corresponds with respect to shape and size to the recess (8) arranged in the central region (7) of the spring body (4), wherein the projection (12) of the cover part (11) engages in particular in the recess (8) of the spring body (4).

8. Wheel suspension according to claim 7, **characterized in that** between the spring body (4) and the cover part (11) an intermediate piece (13) is arranged.

9. Wheel suspension according to claim 8, **characterized in that** the cover part (11) is designed and arranged on the intermediate piece (13) such that the cover part (11) is arranged at a distance from the spring body (4) also in regions in which no intermediate piece (13) is provided between the spring body (4) and the cover part (11).

10. Wheel suspension according to claim 8 or 9, **characterized in that** the intermediate piece (13) has a cavity (15) which corresponds in shape and size to the recess (8) arranged in the central region (7) of the spring body (4) and is arranged above the recess (8), wherein the projection (12) of the cover part (11) penetrates the cavity (15).

11. Wheel suspension according to one of the claims 8 to 10, **characterized in that** the hardness of the intermediate piece (13) is less than the hardness of the spring body (4), in particular in the range between 30 shore D and 90 shore D, wherein the intermediate piece (13) is preferably made of rubber or thermoplastic material.

12. Wheel suspension according to one of the claims 8 to 11, **characterized in that** the cover part (11) comprises a recess (14) on the side facing the spring body (4), said recess corresponding in shape and size to the intermediate piece (13), in particular that the intermediate piece (13) is arranged in particular in a form-fitting manner in the recess (14) of the cover part (11).

13. Vehicle, in particular medium-weight or heavy truck, **characterized in that** it has a suspension according to one of the claims 5 to 12.

## Revendications

1. Ressort, en particulier ressort à lames (1) pour une suspension de roue d'un véhicule, lequel ressort (1) possède un corps de ressort (4) allongé avec deux extrémités longitudinales et une partie centrale (7), la partie centrale (7) du corps de ressort (4) ayant une plus grande épaisseur de base que le reste du corps de ressort (4), **caractérisé en ce que** le corps de ressort (4) se compose d'un matériau composite, **en ce qu'**une fente allongée (8) formant un renfoncement (8), qui s'étend pour l'essentiel transversalement par rapport à l'étendue longitudinale du corps de ressort (4), est prévue dans la partie centrale (7) du corps de ressort (4) et **en ce que** sont disposées à la surface de la partie centrale (7) du corps de ressort (4) des fibres (10), en particulier des fibres de verre, qui s'étendent pour l'essentiel parallèlement au renfoncement (8) et de préférence sur les deux côtés longitudinaux du renfoncement (8).

2. Ressort selon la revendication 1, **caractérisé en ce que** le matériau composite contient des fibres de verre qui sont de préférence intégrées dans la matière plastique du matériau composite pour servir d'éléments de renfort.

3. Ressort selon la revendication 1 ou 2, **caractérisé en ce que** le matériau composite est une résine thermodurcissable ou thermoplastique, en particulier **en ce que** le matériau composite contient du polyuréthane et/ou du polyamide et/ou du polyester.

4. Ressort selon l'une des revendications 1 à 3, **caractérisé en ce que** sont disposées sur la surface du corps de ressort (4) des fibres (9), en particulier des fibres de verre, qui s'étendent de façon sensiblement parallèle à l'étendue longitudinale du corps de ressort (4), en particulier de la région d'une extrémité longitudinale à la région de l'extrémité longitudinale opposée du corps de ressort (4).

5. Suspension de roue d'un véhicule avec un essieu (3) et un ressort (1), **caractérisée en ce qu'**elle comporte un ressort (1) selon l'une des revendications 1 à 4.

6. Suspension de roue selon la revendication 5, **caractérisée en ce que** le renfoncement (8) dans le corps de ressort (4) est disposé sur le côté du corps de ressort (4) tourné vers l'essieu (3) dans la position d'utilisation, et éventuellement aussi sur le côté opposé du corps de ressort (4).

7. Suspension de roue selon la revendication 5 ou 6, **caractérisée en ce qu'**est disposée dans la partie centrale (7) du corps de ressort (4) une pièce de couverture (11), en particulier une plaque, de préférence une plaque d'acier (11), qui présente une saillie (12) dont la forme et la taille correspondent au renfoncement (8) disposé dans la partie centrale (7) du corps de ressort (4), la saillie (12) de la pièce de couverture (11) se mettant en particulier en prise dans le renfoncement (8) du corps de ressort (4).

8. Suspension de roue selon la revendication 7, **caractérisée en ce qu'**une pièce intercalaire (13) est disposée entre le corps de ressort (4) et la pièce de couverture (11).

9. Suspension de roue selon la revendication 8, **caractérisée en ce que** la pièce de couverture (11) est réalisée et disposée sur la pièce intercalaire (13) de telle façon que la pièce de couverture (11) est disposée à distance du corps de ressort (4) même dans les zones où il n'y a pas de pièce intercalaire (13) entre le corps de ressort (4) et la pièce de couverture (11).

10. Suspension de roue selon la revendication 8 ou 9, **caractérisée en ce que** la pièce intercalaire (13) présente un creux (15) dont la forme et la taille correspondent au renfoncement (8) disposé dans la partie intermédiaire (7) du corps de ressort (4) et qui est disposée au-dessus du renfoncement (8), la saillie (12) de la pièce de couverture (11) traversant le creux (15).

11. Suspension de roue selon l'une des revendications 8 à 10, **caractérisée en ce que** la dureté de la pièce intercalaire (13) est inférieure à celle du corps de ressort (4), en particulier comprise entre 30 Shore D et 90 Shore D, la pièce intercalaire (13) se composant de préférence de caoutchouc ou de matériau thermoplastique.

12. Suspension de roue selon l'une des revendications 8 à 11, **caractérisée en ce que** la pièce de couverture (11) présente sur le côté tourné vers le corps de ressort (4) un renfoncement (14) dont la forme et la taille correspondent à la pièce intercalaire (13), en particulier **en ce que** la pièce intercalaire (13) est disposée en particulier en correspondance de forme dans le renfoncement (14) de la pièce de couverture (11).

13. Véhicule, en particulier véhicule utilitaire moyen ou lourd, **caractérisé en ce qu'**il présente une suspension de roue selon l'une des revendications 5 à 12.
